# EUROPEAN PATENT SPECIFICATION

(11) **EP 3 957 540 B1**
(45) Date of publication and mention of the grant of the patent: **13.12.2023**
(21) Application number: 20847806.5
(22) Date of filing: 11.06.2020
(51) Int. Cl.: B61H 5/00

(54) **RAILWAY VEHICLE AND BRAKING ASSEMBLY THEREOF**
SCHIENENFAHRZEUG UND BREMSANORDNUNG DAFÜR
VÉHICULE FERROVIAIRE ET ENSEMBLE FREINAGE DE CELUI-CI

(30) Priority: 31.07.2019 CN 201910703018
(43) Date of publication of application: 23.02.2022
(73) Proprietor: CRRC Changchun Railway Vehicles Co., Ltd., Changchun, Jilin 130000 (CN)
(72) Inventor: XIN, Zhiqiang, Changchun, Jilin 130000 (CN); XU, Wenyao, Changchun, Jilin 130000 (CN); QIAO, Feng, Changchun, Jilin 130000 (CN); HU, Gongjue, Changchun, Jilin 130000 (CN)
(74) Representative: Sharman, Thomas Alexander
(86) International application number: PCT/CN2020/095567
(87) International publication number: WO 2021/017657

(56) References cited:
- CN-A- 106 915 361
- CN-A- 107 628 059
- CN-A- 107 628 059
- CN-A- 107 628 059
- CN-A- 108 423 027
- CN-A- 108 423 027
- CN-A- 108 482 415
- CN-A- 108 609 028
- CN-A- 108 609 028
- CN-A- 110 371 157
- DE-A1- 1 427 515
- JP-A- H11 137 781

## Description

### RAILWAY VEHICLE AND BRAKING ASSEMBLY THEREOF

This invention claims priority of Chinese Patent Application No. 201910703018.0, titled "RAILWAY VEHICLE AND BRAKING ASSEMBLY THEREOF", filed with the China National Intellectual Property Administration on July 31, 2019.

### FIELD

The present invention relates to the technical field of supporting assemblies for railway vehicle brake systems, and in particular to a brake assembly and a railway vehicle using the brake assembly.

### BACKGROUND

At present, a rail gauge adopted by most of the railway vehicles in China is a standard gauge, so a fixed gauge bogie is adopted. That is, a distance between two sets of wheel pairs of a vehicle remains unchanged, and there is only a small amount of lateral movement between a main frame of the vehicle and the wheel pairs. However, in some areas, a railway vehicle needs to run continuously on rails with different rail gauges, so that the bogie is required to have a gauge-changing function. That is, the distance between the two sets of wheels can be changed according to the rail gauge of the rail being travelled on.

Correspondingly, a brake disc installed on the wheel pair may also perform a gauge-changing movement with the wheel pair, and a brake clamp unit that is matched with the brake disc must also have the gauge-changing function. However, the existing brake clamp unit is installed on the main frame of the vehicle, and cannot perform a wide-range lateral movement, and therefore cannot meet corresponding requirement of a gauge-changing operation. CN 108423027 A discloses following mechanism for a gauge-changeable bogie and a brake clamp unit. The following mechanism includes a following connecting piece, unlocking parts located on the two sides of the following connecting piece and movably connected with the following connecting piece, a horizontal displacement recognizing device movably connected to the unlocking parts, a tooth type locking positioning device mounted on the following connecting piece and at least two mutually parallel fixing members.

The following connecting piece and the fixing members are mounted in a sliding fitmode, and the end of each unlocking part is fixedly connected with a sliding part. The tooth type locking positioning device is movably connected with the horizontal displacement recognizing device and the fixing members. The brake clamp unit includes a mounting bracket, a following mechanism and a brake execution mechanism mounted on the mounting bracket. The following connecting piece and the brake execution mechanism are mounted in a matched mode, and the fixing members are fixedly mounted on the mounting bracket. The following mechanism can automatically identify a gauge change signal and follow the wheel movement by means of elastic force stored by the following mechanism and the unlocking parts, and self-locking is performed at a target gauge position, to achieve position change.

CN 108609028A discloses a bullet train gauge-changeable bogie for a railway car. The bullet train gauge-changeable bogie comprises a frame, and a wheel-mounted brake discs are mounted on wheels of gauge-changeable wheelsets. Side beams or cross beams of the frame are provided with brake clamps and mounting seats, and the brake clamps are connected to the mounting seats through support pins. The support pins are horizontally disposed under the mounting seats and both ends of the support pins are fixedly connected to the mounting seats. Connecting sleeves are arranged at one ends of the brake clamps, and the connecting sleeves are internally sleeved with damping inner sleeves with elastic damping in a fastening mode. The connecting sleeves are locked on the support pins through the damping inner sleeves. When thrust received by the connecting sleeves is greater than damping force between the connecting sleeves and the support pins, the connecting sleeves drive the brake clamps to move along the supporting pins. The bullet train gauge-changeable bogie for the railway car can satisfy the parking brake of the gauge-changeable wheelsets under different gauge distances, improves the operation efficiency of the gauge-changeable wheelsets on different tracks, and ensures the safety of the car operation.

Therefore, a technical issue to be addressed presently by those skilled in the art is to make each component of the vehicle brake assembly have a wide-range lateral movement capability, so that the brake assembly can meet the requirement of the vehicle for travelling on a gauge-changing rail.

### SUMMARY

An object of the present invention is to provide a brake assembly, which has a wide-range lateral movement capability and can fully meet the requirement of working conditions when a rail vehicle is traveling on a gauge-changing rail. Another object of the present invention is to provide a rail vehicle using the above brake assembly.

In order to solve the above technical problems, a brake assembly is provided according to the present invention, which includes a brake disc arranged under a vehicle frame and a guide rail located between the vehicle frame and the brake disc, where the guide rail extends along a width direction of the vehicle frame; the guide rail is provided with a brake clamp clamped on the brake disc, and the brake clamp is movable along an extension direction of the guide rail. A moving block that is moveable along the extension direction of the guide rail is provided on the guide rail. The brake clamp is arranged at a bottom portion of the moving block in linkage.

Preferably, a base is provided on the vehicle frame, a locking member that cooperates with the brake clamp is provided under the base, and a spring that is extendable and retractable in a vertical direction is connected between the locking member and the base.

Preferably, a sliding rail extending in the vertical direction is provided on the base; a sliding block that is moveable along an extension direction of the sliding rail is provided on the sliding rail; and a top end of the spring is connected to the sliding block.

Preferably, the locking member is a connecting rod; two ends of the connecting rod are respectively hinged with the spring and the brake clamp; the spring is located directly above a midpoint of the guide rail, and a distance between a bottom end of the spring in a limit compression state and the midpoint of the guide rail is not less than a length of the connecting rod.

Preferably, the locking member is a locking pin connected to a bottom portion of the spring, and locking holes that are detachably clamped with the locking pin are respectively provided at top portions of two ends of the guide rail.

Preferably, the locking pin is a ball pin, and the locking hole is a spherical hole.

(*deleted*)

A rail vehicle is further provided according to the present invention, which includes a vehicle frame and a brake assembly, where the brake assembly is the brake assembly according to any one of the above.

Compared with the above background technology, in the brake assembly provided according to the present invention, during a travelling process of the rail vehicle, when the vehicle performs a gauge-changing operation, the brake disc drives the brake clamp to move accordingly along the extension direction of the guide rail, which achieves spacing adjustment of two corresponding brake clamps respectively arranged on two sides of the bottom of a vehicle body, so as to adapt to the adjusted rail gauge size, further ensure that relevant components of the rail vehicle can be adaptively adjusted according to the current gauge-changing operation, and ensure that the rail vehicle continues to maintain stable and continuous travelling after the gauge-changing operation is completed. Since the above brake clamp can move by a large displacement along the extension direction of the guide rail, an adjustment range of a lateral position of the brake clamp is greatly improved, and the adaptability of the gauge-changing working conditions of the rail vehicle can be improved accordingly.

In another preferred solution of the present invention, the base is provided on the vehicle frame, and the locking member that cooperates with the brake clamp is provided under the base. A spring that is extendable and retractable in the vertical direction is connected between the locking member and the base. In a normal travelling state of the vehicle, the locking member cooperates with the spring and the base to form a connecting rod locking mechanism, which prevents the brake clamp from generating a tendency to move along the extension direction of the guide rail, and ensures the structural integrity of the brake assembly and the travelling stability of the vehicle. When the gauge-changing operation is performed, the brake clamp is subjected to a relatively large lateral force transmitted from the brake disc, which prompts the brake clamp to overcome an elastic resistance of the spring and move from one end of the guide rail to the other of the guide rail. During this movement, the brake clamp drives the locking member to move in linkage, and further compresses the spring until it reaches the limit position. After that, the brake clamp continues to move and gradually approaches the other end of the guide rail. At this time, the brake clamp does not apply force on the spring, so that the spring begins to gradually extend and apply an elastic restoring force of the spring on the brake clamp so as to promote the brake clamp to approach the other end of the guide rail more quickly until the spring is fully extended and restored to a free state. In a case that the rail gauge is changed again and the brake clamp has a tendency to move to the original end of the guide rail again, each mechanism can repeat the above action process in reverse. The locking member, the spring, and the base cooperate to provide a certain degree of initial portion limiting and final portion assistance for the brake clamp when the gauge-changing operation is required, so as to further improve the action efficiency of the brake assembly and the linkage of related components of the rail vehicle during the gauge-changing operation, and ensure the travelling comfort and stability of the vehicle.

### BRIEF DESCRIPTION OF THE DRAWINGS

For more clearly illustrating embodiments of the present invention or the technical solutions in the conventional technology, drawings referred to for describing the embodiments or the conventional technology will be briefly described hereinafter.
FIG. 1 is a schematic structural view of a brake assembly during movement provided according to a specific embodiment of the present invention;
FIG. 2 is a schematic structural view of the brake assembly in FIG. 1 after an action is completed;
FIG. 3 is a schematic structural view of a brake assembly during movement provided according to another specific embodiment of the present invention; and
FIG. 4 is a schematic structural view of the brake assembly in FIG. 3 after an action is completed.

Reference numerals in the figures:
11-guide rail, 111-locking hole, 112-moving block, 12-base, 121-sliding rail, 122-sliding block, 13-locking member, 131-spring, 21-brake disc, 22-vehicle frame, 23-brake clamp.

### DETAILED DESCRIPTION OF THE EMBODIMENTS

A core of the present invention is to provide a brake assembly, which has a wide-range lateral movement capability and can fully meet the requirement of working conditions when a rail vehicle is traveling on a gauge-changing rail; moreover, a rail vehicle using the above brake assembly is further provided.

In order to enable those skilled in the art to better understand the solution of the present invention, the present invention will be further described in detail below with reference to the accompanying drawings and specific embodiments.

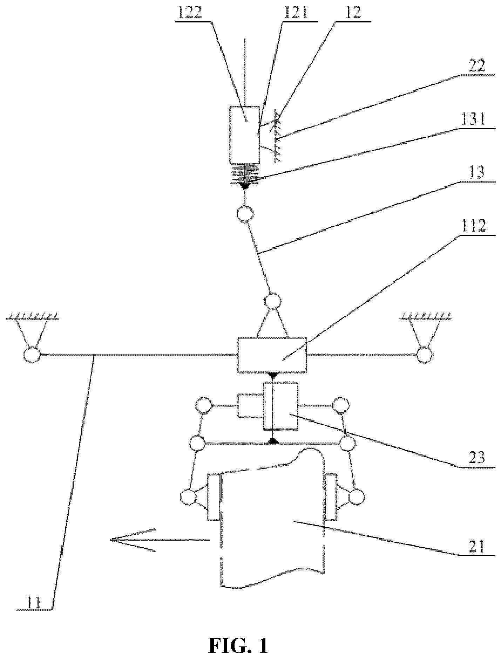

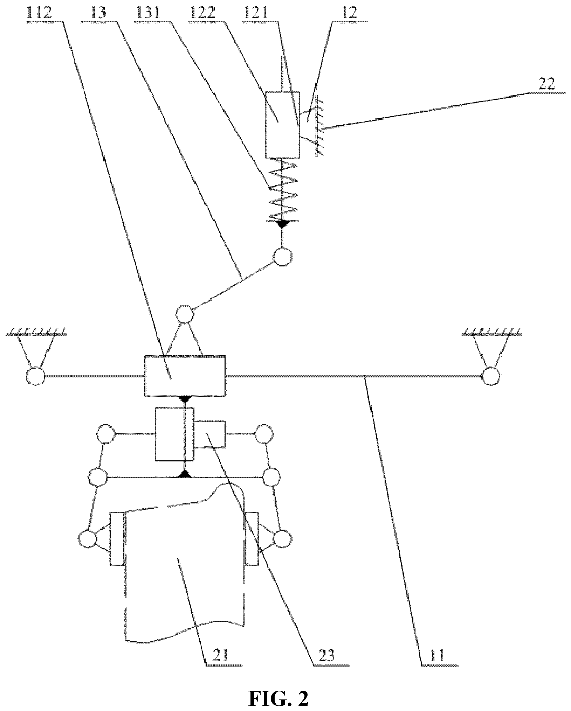

Reference is made to FIG. 1 and FIG. 2. FIG. 1 is a schematic structural view of a brake assembly during movement provided according to a specific embodiment of the present invention;
FIG. 2 is a schematic structural view of the brake assembly in FIG. 1 after an action is completed.

In a specific embodiment, the brake assembly provided according to the present invention includes a brake disc 21 arranged under a vehicle frame 22 and a guide rail 11 located between the vehicle frame 22 and the brake disc 21, where the guide rail 11 extends along the width direction of the vehicle frame 22; the guide rail 11 is provided with a brake clamp 23 clamped on the brake disc 21, and the brake clamp 23 is movable along the extension direction of the guide rail 11.

During a travelling process of the rail vehicle, when the vehicle performs a gauge-changing operation, the brake disc 21 drives the brake clamp 23 to move accordingly along the extension direction of the guide rail 11, which achieves spacing adjustment of two corresponding brake clamps 23 respectively arranged on two sides of the bottom of a vehicle body, so as to adapt to the adjusted rail gauge size, further ensure that relevant components of the rail vehicle can be adaptively adjusted according to the current gauge-changing operation, and ensure that the rail vehicle continues to maintain stable and continuous travelling after the gauge-changing operation is completed. Since the above brake clamp 23 can move by a large displacement along the extension direction of the guide rail 11, an adjustment range of a lateral position of the brake clamp 23 is greatly improved, and the adaptability of the gauge-changing working conditions of the rail vehicle can be improved accordingly.

It should be noted that the "lateral" mentioned above and hereinafter, unless otherwise specified, refers to the width direction of the vehicle frame 22, that is, the extension direction of the guide rail 11.

Specifically, a base 12 is provided on the vehicle frame 22, and a locking member 13 that cooperates with the brake clamp 23 is provided under the base 12. A spring 131 that is extendable and retractable in a vertical direction is connected between the locking member 13 and the base 12. In a normal travelling state of the vehicle, the locking member 13 cooperates with the spring 131 and the base 12 to form a connecting rod locking mechanism, which prevents the brake clamp 23 from generating a tendency to move along the extension direction of the guide rail 11, and ensures the structural integrity of the brake assembly and the travelling stability of the vehicle. When the gauge-changing operation is performed, the brake clamp 23 is subjected to a relatively large lateral force transmitted from the brake disc 21, which prompts the brake clamp 23 to overcome an elastic resistance of the spring 131 and move from one end of the guide rail 11 to the other of the guide rail 11. During this movement, the brake clamp 23 drives the locking member 13 to move in linkage, and further compresses the spring 131 until it reaches the limit position. After that, the brake clamp 23 continues to move and gradually approaches the other end of the guide rail 11. At this time, the brake clamp 23 does not apply force on the spring 131, so that the spring 131 begins to gradually extend and apply an elastic restoring force of the spring 131 on the brake clamp 23 so as to promote the brake clamp 23 to approach the other end of the guide rail 11 more quickly until the spring 131 is fully extended and restored to a free state. In a case that the rail gauge is changed again and the brake clamp 23 has a tendency to move to the original end of the guide rail 11 again, each mechanism can repeat the above action process in reverse. The locking member 13, the spring 131, and the base 12 cooperate to provide a certain degree of initial portion limiting and final portion assistance for the brake clamp 23 when the gauge-changing operation is required, so as to further improve the action efficiency of the brake assembly and the linkage of related components of the rail vehicle during the gauge-changing operation, and ensure the travelling comfort and stability of the vehicle.

It should be further explained that, in order to facilitate the reference, comparison and understanding of the technical solution, in the accompanying drawings herein, FIG. 1, FIG. 2, FIG. 3 and FIG. 4 all show a state of the brake clamp 23 moving from a right end of the guide rail 11 to a left end of the guide rail 11 in the drawings.

Reference is made to FIG. 1 and FIG. 2. A sliding rail 121 extending in the vertical direction is provided on the base 12; a sliding block 122 that is moveable along an extension direction of the sliding rail 121 is provided on the sliding rail 121; and a top end of the spring 131 is connected to the sliding block 122. In a case that the brake clamp 23 has a tendency to move laterally, a force applied on the brake clamp 23 is transmitted to the sliding block 122 via the locking member 13, so as to drive the sliding block 122 to move appropriately along the sliding rail 121, which can effectively relieve the minor-scale swing and the structural impact of the brake clamp 23 during normal travelling, provide an effective buffering for an initial moving force of the brake clamp 23 when the vehicle performs the gauge-changing operation, prevent the force transmitted under a large-scale movement tendency of the brake clamp 23 from generating a rigid impact on the vehicle frame 22, and ensure the stability of the vehicle body and riding comfort of the rail vehicle.

More specifically, the locking member 13 is a connecting rod; two ends of the connecting rod are respectively hinged with the spring 131 and the brake clamp 23; the spring 131 is located directly above the midpoint of the guide rail 11, and a distance between the bottom end of the spring 131 in a limit compression state and the midpoint of the guide rail 11 is not less than a length of the connecting rod. This kind of connecting rod has a simple and reliable structure, and the distance between the bottom end of the spring 131 in the limit compression state and the midpoint of the guide rail 11 is not less than the length of the connecting rod, which can effectively prevent the brake clamp 23 from being blocked or stuck during the lateral movement, ensure the overall gauge-changing action efficiency and the assembly linkage of the brake clamp 23 and even the brake assembly, and improve the overall gauge-change action efficiency and travelling stability of the rail vehicle correspondingly.

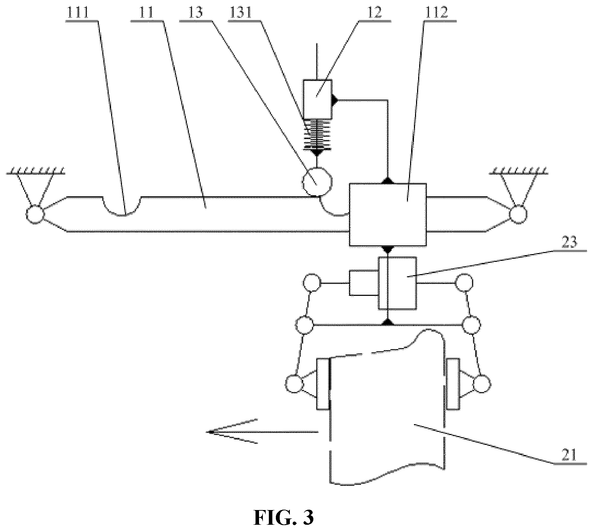

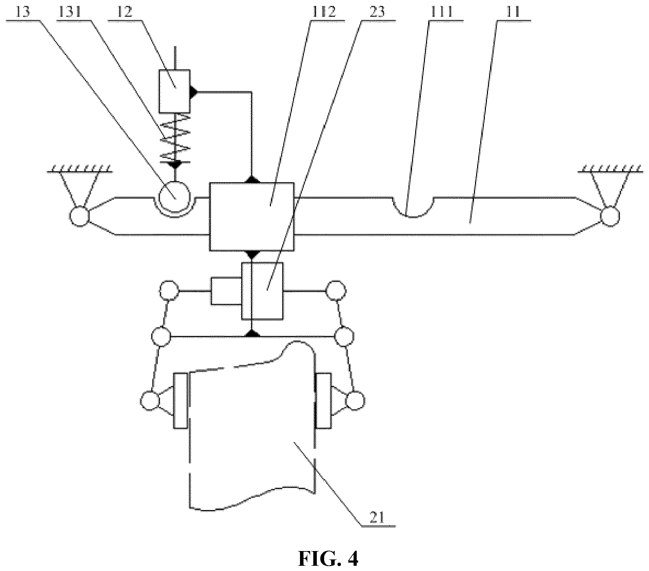

Reference is made to FIG. 3 and FIG. 4. FIG. 3 is a schematic structural view of a brake assembly during movement provided according to another specific embodiment of the present invention;
and FIG. 4 is a schematic structural view of the brake assembly in FIG. 3 after an action is completed.

In this specific embodiment of the present solution, the locking member 13 is a locking pin connected to the bottom portion of the spring 131, and locking holes 111 that are detachably clamped with the locking pin are respectively provided on top portions of two ends of the guide rail 11. A force transmission efficiency of this kind of locking pin is relatively high. A component linkage process is flexible and efficient, and the locking holes 111 can lock the locking pin in time and accurately after the brake clamp 23 has been moved in position, so that a position of the brake clamp 23 is locked by linkage so as to prevent the brake clamp 23 from loosening or misalignment during the normal travelling of the vehicle, and ensure the travelling stability and comfort of the vehicle.

In addition, the locking pin is a ball pin, and the locking hole 111 is a spherical hole. The stress distribution between the ball pin and related contacting members is relatively reasonable, which can effectively avoid the structural damage on related matching members caused by excessive rigid impact. Moreover, the spherical hole can effectively reduce the resistance of the ball pin in the process of disengaging and engaging the hole, and can improve the alignment efficiency between the locking pin and the locking hole 111.

On the other hand, a moving block 112 that is moveable along the extension direction of the guide rail 11 is provided on the guide rail 11; the brake clamp 23 is arranged at a bottom portion of the moving block 112 in linkage. The moving block 112 can provide a reliable structural connection between the brake clamp 23 and the guide rail 11, avoid interference with the main structure of the brake clamp 23 due to the direct connection of the brake clamp 23 and the guide rail 11, ensure the degree of freedom of braking and clamping action of the brake clamp 23 and the working stability of the brake clamp 23, and ensure the working reliability of the brake assembly of the rail vehicle.

In a specific embodiment, the rail vehicle provided according to the present invention includes a vehicle frame and a brake assembly, and the brake assembly is the brake assembly described in the above embodiments. The brake assembly of the rail vehicle has a wide-range lateral movement capability and can fully meet the requirement of working conditions when a rail vehicle is traveling on a gauge-changing rail.

In summary, in the brake assembly provided according to the present invention, during a travelling process of the rail vehicle, when the vehicle performs a gauge-changing operation, the brake disc drives the brake clamp to move accordingly along the extension direction of the guide rail, which achieves spacing adjustment of two corresponding brake clamps respectively arranged on two sides of the bottom of the vehicle body, so as to adapt to the adjusted rail gauge size, further ensure that relevant components of the rail vehicle can be adaptively adjusted according to the current gauge-changing operation, and ensure that the rail vehicle continues to maintain stable and continuous travelling after the gauge-changing operation is completed. Since the above brake clamp can move by a large displacement along the extension direction of the guide rail, an adjustment range of a lateral position of the brake clamp is greatly improved, and the adaptability of the gauge-changing working conditions of the rail vehicle can be improved accordingly.

In addition, the rail vehicle using the above brake assembly provided according to the present invention has a wide-range lateral movement capability and can fully meet the requirement of working conditions when a rail vehicle is traveling on a gauge-changing rail.

## Claims

1. A brake assembly, comprising a brake disc (21) provided under a vehicle frame (22) and a guide rail (11) located between the vehicle frame (22) and the brake disc (21), wherein the guide rail (11) extends along a width direction of the vehicle frame (22); the guide rail (11) is provided with a brake clamp (23) clamped on the brake disc (21), and the brake clamp (23) is movable along an extension direction of the guide rail (11), **characterised by** a moving block (112) that is moveable along the extension direction of the guide rail (11) is provided on the guide rail (11); and the brake clamp (23) is arranged at a bottom portion of the moving block (112) in linkage.

2. The brake assembly according to claim 1, wherein a base (12) is provided on the vehicle frame (22), and a locking member (13) that cooperates with the brake clamp (23) is arranged under the base (12); and a spring (131) that is extendable and retractable in a vertical direction is connected between the locking member (13) and the base (12).

3. The brake assembly according to claim 2, wherein a sliding rail (121) extending in the vertical direction is provided on the base (12); a sliding block (122) that is moveable along an extension direction of the sliding rail (121) is provided on the sliding rail (121); and a top end of the spring (131) is connected to the sliding block (122).

4. The brake assembly according to claim 2, wherein the locking member (13) is a connecting rod; two ends of the connecting rod are respectively hinged with the spring (131) and the brake clamp (23); wherein the spring (131) is located directly above a midpoint of the guide rail (11), and a distance between a bottom end of the spring (131) in a limit compression state and the midpoint of the guide rail (11) is not less than a length of the connecting rod.

5. The brake assembly according to claim 2, wherein the locking member (13) is a locking pin connected to a bottom portion of the spring (131), and locking holes (111) that are detachably clamped on the locking pin are respectively provided on top portions of two ends of the guide rail (11).

6. The brake assembly according to claim 5, wherein the locking pin is a ball pin, and each of the locking holes (111) is a spherical hole.

7. A rail vehicle comprising a vehicle frame (22) and a brake assembly, wherein the brake assembly is the brake assembly according to any one of claims 1 to 6.

## Patentansprüche

1. Bremsanordnung, die eine Bremsscheibe (21), die unter einem Fahrzeugrahmen (22) bereitgestellt ist, und eine Führungsschiene (11), die zwischen dem Fahrzeugrahmen (22) und der Bremsscheibe (21) bereitgestellt ist, aufweist, wobei die Führungsschiene (11) sich an einer Breitenrichtung des Fahrzeugrahmens (22) entlang erstreckt; wobei die Führungsschiene (11) mit einer auf die Bremsscheibe (21) aufgeklemmten Bremszange (23) versehen ist und die Bremszange (23) an einer Erstreckungsrichtung der Führungsschiene (11) entlang bewegbar ist, **dadurch gekennzeichnet, dass**
ein bewegter Block (112), der an der Erstreckungsrichtung der Führungsschiene (11) entlang bewegbar ist, an der Führungsschiene (11) bereitgestellt ist;
und die Bremszange (23) an einem unteren Teil des bewegten Blocks (112) in Gestängeverbindung angeordnet ist.

2. Bremsanordnung nach Anspruch 1, wobei am Fahrzeugrahmen (22) eine Basis (12) bereitgestellt ist und ein Arretierungselement (13), das mit der Bremszange (23) zusammenwirkt, unter der Basis (12) angeordnet ist; und eine Feder (131), die in vertikaler Richtung ausziehbar und zusammenziehbar ist, zwischen dem Arretierungselement (13) und der Basis (12) angeschlossen ist.

3. Bremsanordnung nach Anspruch 2, wobei eine Gleitschiene (121), die sich in der vertikalen Richtung erstreckt, an der Basis (12) bereitgestellt ist; ein Gleitblock (122), der entlang einer Erstreckungsrichtung der Gleitschiene (121) beweglich ist, an der Gleitschiene (121) vorgesehen ist; und ein oberes Ende der Feder (131) mit dem Gleitblock (122) verbunden ist.

4. Bremsanordnung nach Anspruch 2, wobei das Arretierungselement (13) eine Verbindungsstange ist; zwei Enden der Verbindungsstange an der Feder (131) bzw. der Bremszange (23) angelenkt sind; wobei die Feder (131) sich direkt über einem Mittelpunkt der Führungsschiene (11) befindet und ein Abstand zwischen einem unteren Ende der Feder (131) in einem Endkompressionszustand und dem Mittelpunkt der Führungsschiene (11) nicht kleiner als eine Länge der Verbindungsstange ist.

5. Bremsanordnung nach Anspruch 2, wobei das Arretierungselement (13) ein Arretierungsstift ist, der mit einem unteren Teil der Feder (131) verbunden ist, und Arretierungslöcher (111), die abnehmbar auf den Arretierungsstift geklemmt werden, jeweils an oberen Teilen von zwei Enden der Führungsschiene (11) bereitgestellt sind.

6. Bremsanordnung nach Anspruch 5, wobei der Arretierungsbolzen ein Kugelbolzen ist, und jedes der Arretierungslöcher (111) ein kugelförmiges Loch ist.

7. Schienenfahrzeug, das einen Fahrzeugrahmen (22) und eine Bremsanordnung aufweist, wobei die Bremsanordnung die Bremsanordnung nach einem der Ansprüche 1 bis 6 ist.

## Revendications

1. Ensemble de frein, comprenant un disque de frein (21) fourni sous un châssis de véhicule (22) et un rail de guidage (11) situé entre le châssis de véhicule (22) et le disque de frein (21), dans lequel le rail de guidage (11) s'étend le long d'une direction de largeur du châssis de véhicule (22) ; le rail de guidage (11) est pourvu d'une pince de frein (23) serrée sur le disque de frein (21), et la pince de frein (23) est amovible le long d'une direction d'extension du rail de guidage (11), **caractérisé par**
un bloc mobile (112) qui est amovible le long de la direction d'extension du rail de guidage (11) est fourni sur le rail de guidage (11) ; et la pince de frein (23) est arrangée à une partie inférieure du bloc mobile (112) dans la tringlerie.

2. Ensemble de frein selon la revendication 1, dans lequel une base (12) est fournie sur le châssis de véhicule (22), et un membre de verrouillage (13) qui coopère avec la pince de frein (23) est arrangé sous la base (12) ; et un ressort (131) qui est étirable et contractable dans une direction verticale est raccordé entre le membre de verrouillage (13) et la base (12).

3. Ensemble de frein selon la revendication 2, dans lequel un rail coulissant (121) s'étendant dans la direction verticale est fourni sur la base (12) ; un bloc coulissant (122) qui est amovible le long d'une direction d'extension du rail coulissant (121) est fourni sur le rail coulissant (121) ; et une extrémité supérieure du ressort (131) est raccordée au bloc coulissant (122).

4. Ensemble de frein selon la revendication 2, dans lequel le membre de verrouillage (13) est une bielle; deux extrémités de la bielle sont respectivement articulées avec le ressort (131) et la pince de frein (23) ; dans lequel le ressort (131) est situé directement au-dessus d'un point central du rail de guidage (11), et une distance entre une extrémité inférieure du ressort (131) dans un état de compression limite et le point central du rail de guidage (11) n'est pas moins qu'une longueur de la bielle.

5. Ensemble de frein selon la revendication 2, dans lequel le membre de verrouillage (13) est une goupille de verrouillage raccordée à une partie inférieure du ressort (131), et des trous de verrouillage (111) qui sont serrés de manière détachable sur la goupille de verrouillage sont fournis respectivement sur des parties supérieures de deux extrémités du rail de guidage (11).

6. Ensemble de frein selon la revendication 5, dans lequel la goupille de verrouillage est une goupille à bille, et chacun des trous de verrouillage (111) est un trou sphérique.

7. Véhicule ferroviaire comprenant un châssis de véhicule (22) et un ensemble de frein, dans lequel l'ensemble de frein est l'ensemble de frein selon l'une quelconque des revendications 1 à 6.
